# EUROPÄISCHE PATENTSCHRIFT

(11) **EP 0 682 778 B1**
(45) Veröffentlichungstag und Bekanntmachung des Hinweises auf die Patenterteilung: **10.09.1997**
(21) Anmeldenummer: 94906841.5
(22) Anmeldetag: 01.02.1994
(51) Int. Cl.: G02B 6/42

(54) **ELEKTRO-OPTISCHES MODUL**
ELECTRO-OPTICAL MODULE
MODULE ELECTRO-OPTIQUE

(30) Priorität: 05.02.1993 DE 4303780
(43) Veröffentlichungstag der Anmeldung: 22.11.1995
(73) Patentinhaber: SIEMENS AKTIENGESELLSCHAFT, 80333 München (DE)
(72) Erfinder: SCHULZ, Klaus, D-12309 Berlin (DE)
(86) Internationale Anmeldenummer: DE9400119
(87) Internationale Veröffentlichungsnummer: WO9418586

(56) Entgegenhaltungen:
- WO-A-91/11743
- US-A- 5 104 242
- PATENT ABSTRACTS OF JAPAN vol. 4, no. 115 (P-23) (597) 28. Mai 1980 & JP,A,55 070 803 (NOPPON DENSHIN DENWA)
- PATENT ABSTRACTS OF JAPAN vol. 6, no. 265 (P-165) (1143) 30. September 1982 & JP,A,57 158 606 (FUJITSU)
- PATENT ABSTRACTS OF JAPAN vol. 6, no. 245 (P-159) (1123) 3. September 1982 & JP,A,57 142 607 (YAMATAKE HONEYWELL)

## Beschreibung

Die Erfindung betrifft ein elektro-optisches Modul.

Unter einem elektro-optischen Modul sind beispielsweise die aus dem Prospekt "Fiber Optic Components" der Siemens AG, Ausgabe EC 0291 bekannten Module und insbesondere die sogenannten Transceiver zu verstehen. Diese bekannten elektro-optischen Module haben ein Gehäuse, in dem oder an dem zwei elektro-optische Bauelemente gehalten sind. Das elektro-optische Bauelement kann beispielsweise eine Laser-Sendediode sein; deren optische Wirkfläche - d. h. die Austrittsfläche des von dem Bauelement gesendeten Lichts - ist mit einem Verbindungselement optisch koppelbar. Dazu enthält das Gehäuse eine Öffnung, in die das Verbindungselement einführbar ist. Das Gehäuse kann zusätzlich oder alternativ auch ein als Empfänger ausgebildetes Bauelement enthalten, das auf seine optische Wirkfläche einwirkende Lichtenergie in elektrische Signale umwandelt.

Solange kein Verbindungselement in die Gehäuseöffnung eingeführt und mit dem elektro-optischen Bauelement gekoppelt ist, können Verunreinigungen in das Gehäuse eintreten und die optischen Wirkflächen beeinträchtigen; auch kann unbeabsichtigt Licht auf die Wirkfläche treffen, so daß ein Empfänger in diesem Fall unerwünschte Ausgangssignale liefern würde. Eine besondere Gefahr geht von elektro-optischen Bauelementen aus, die als energiereiche Lichtsender (z. B. Laserdioden) ausgebildet sind, weil die von ihnen abgegebene Strahlung beispielsweise die Augen (insbesondere die Netzhaut) von Lebewesen dauerhaft schädigen kann. Diese Gefahr ist besonders bei einem Defekt der Ansteuerschaltung für den Sender gegeben, der ein dauerhaftes oder periodisches unkontrolliertes Sendesignal bewirkt.

Im Hinblick auf diese Problematik sind bei elektro-optischen Modulen mit jeweils nur einem als Laser-Sendediode ausgebildeten aktiven elektro-optischen Bauelement verschiedene mechanische Schutzvorrichtungen bekannt geworden. Eine derartige, aus der US-PS 5,104,242 bekannte Vorrichtung besteht aus einer schmalen Blattfeder, die bei gezogenem Steckerstift in die Stiftaufnahme hineinragt und den optischen Weg nach außen für abgestrahltes Licht blockiert. Beim Einführen des Steckerstiftes wird die Feder in einen Schlitz der Aufnahmebohrung gedrückt. Diese filigrane Konstruktion ist nicht nur hinsichtlich ihrer mechanischen Belastbarkeit, sondern auch fertigungstechnisch verhältnismäßig problematisch. Bei einer ähnlichen, aus der JP-A-57-142607 bekannten Vorrichtung taucht eine federbeaufschlagte Schutzklappe bei eingeführtem Steckerstift unter Freigabe des optischen Weges in eine in der Aufnahme ausgebildete Ausnehmung ein.

Bei einer aus der JP-A-57-158606 bekannten Schutzvorrichtung ist die Kontur einer federbeaufschlagten, durch den Steckerstift auslenkbaren Schutzkappe an den Steckerstiftmantel angepaßt. Die Schutzklappe übt damit eine radiale Kraft auf den eingeführten Steckerstift aus, die durch eine hochpräzise Steckerstiftlagerung kompensiert werden muß.

Die Aufgabe der Erfindung besteht daher in der Schaffung eines elektro-optischen Moduls, dessen elektro-optische Bauelement gegen Verschmutzungen und Beschädigungen von außen geschützt sind und/oder bei dem ein unbeabsichtigter Lichteinfall oder Lichtaustritt zuverlässig verhindert ist.

Diese Aufgabe wird erfindungsgemäß gelöst durch ein elektro-optisches Modul
- mit einem Gehäuse,
- mit zwei in dem Gehäuse angeordneten elektro-optischen Bauelementen mit Wirkflächen zum Eintritt oder Austritt von optischer Strahlung und mit Aufnahmen, in die je ein Lichtwellenleiter-Steckerstift eines durch eine Gehäuseöffnung einführbaren Verbindungselements zur optischen Kopplung mit den Wirkflächen einsteckbar ist, und
- mit einem Federelement, das Y-förmig ausgebildet ist und das in dem Gehäuse vor den Aufnahmen derart angeordnet ist, daß die freien, lichtundurchlässig ausgebildeten Schenkel der Y-Form oder an den freien Schenkeln angeordnete strahlungsundurchlässige Körper beim Einführen des Verbindungselements aus einer die Wirkflächen der elektro-optischen Bauelemente aus Sicht der Gehäuseöffnung verdeckenden Ruhelage entgegen der Feder-Rückstellkraft in eine die Wirkflächen freigebende Lage auslenkbar sind.

In Ruhelage des Federelements können die optischen Wirkflächen von an dem Federelement angeordnete strahlungsundurchlässige Körper oder vorzugsweise von den Schenkeln des Federelements selbst verdeckt sein. Ein wesentlicher Vorteil der Erfindung besteht darin, daß das Federeiement aufgrund der Feder-Rückstellkraft grundsätzlich in die die Wirkflächen der Bauelemente verdeckende (sichere) Ruhelage zurückgezwungen wird. Dadurch wird sofort beim Entfernen des Verbindungselements ein zuverlässiger Schutz der Wirkflächen der Bauelemente und ggf. der Umwelt vor unkontrolliertem Lichtaustritt aus einem als Sender ausgebildeten Bauelement gewährleistet. Die erfindungsgemäße Ausgestaltung des elektro-optischen Moduls erlaubt damit bei Verwendung eines Laser-Senders die Einstufung in Klasse 1 gemäß DIN VDE 0837 (deutsche Übersetzung der entsprechenden europäischen Norm IEC-Norm 825), nach der eine Schädigung durch die Lasereinrichtung (ohne spezifische Schutzvorkehrungen durch den Anwender) stets ausgeschlossen ist. Die für diese Klassifizierung maßgebliche Gewährleistung, daß für den Anwender die Strahlung einer Lasereinrichtung (Transceiver) nicht zugänglich ist, wird erfindungsgemäß durch eine äußerst einfache und dennoch hochwirksame Konstruktion erreicht, indem die Wirkflächen der beiden in dem Gehäuse angeordneten elektro-optischen Bauelemente (beispielsweise ein Sender und ein Empfänger) von einem einzigen Federelement in dessen Ruhelage jeweils verdeckt und beim Auslenken freigegeben werden.

Vorzugsweise besteht das federnde Element aus Metall; es kann auch aus Kunststoff bestehen und mit dem Gehäuse beispielsweise durch Ultraschall-Schweißung verbunden sein.

Eine weitere Erhöhung der Betriebssicherheit des erfindungsgemäßen elektro-optischen Moduls wird dadurch erreicht, daß auf das Federelement ein weiteres federndes Element zur Erhöhung der Feder-Rückstellkraft einwirkt.

Ein Ausführungsbeispiel der Erfindung wird nachfolgend anhand einer Zeichnung näher erläutert; es zeigen:
Figur 1 einen Schnitt in waagerechter Ebene durch ein erfindungsgemäßes elektro-optisches Modul und die
Figur 2 einen Schnitt in senkrechter Ebene und
Figur 3 eine Ansicht eines Moduls mit einem elektro-Optischen Bauelement.

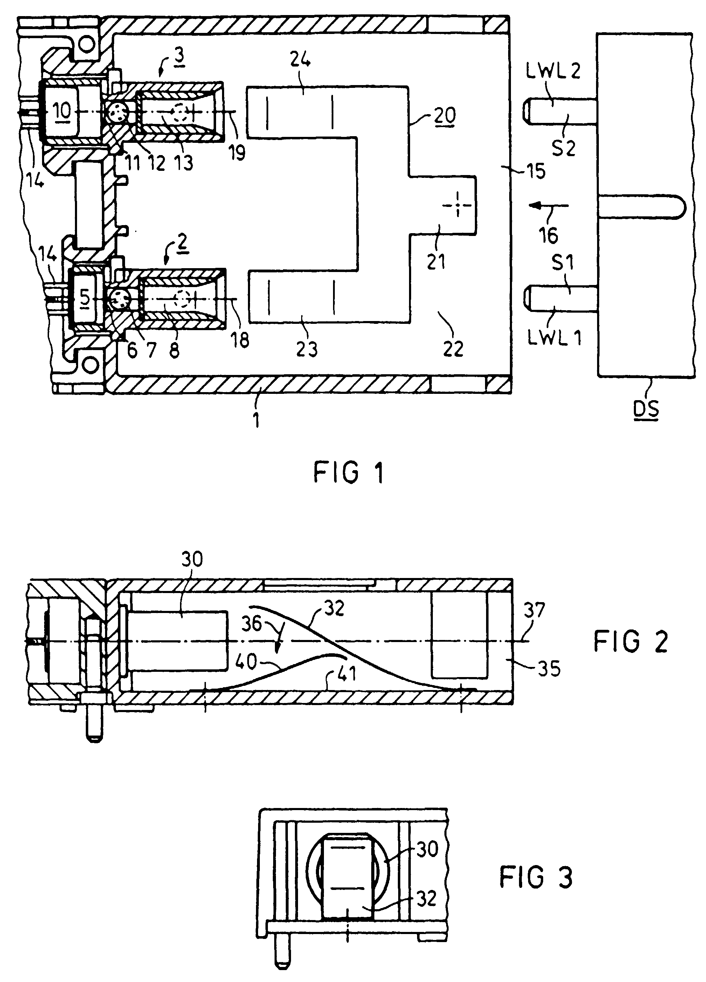

Das in Figur 1 gezeigte elektro-optische Modul hat ein Gehäuse 1, an dem zwei elektro-optische Bauelemente 2, 3 gehalten sind. Das Bauelement 2 umfaßt eine Empfangsdiode 5, auf deren optische Wirkfläche 6 über eine Kugellinse 7 Lichtsignale eines nur schematisch gezeigten, in eine Aufnahme 8 einführbaren Kopplungselementes geleitet werden. Das Kopplungselement ist ein erster Steckerstift S1 mit einem Lichtwellenleiter LWL1 in seiner zentralen Bohrung; der Steckerstift S1 ist Teil eines nur andeutungsweise gezeigten Verbindungselements DS in Form eines sogenannten Duplex-Steckers.

Das zweite elektro-optische Bauelement 3 enthält eine Laserdiode 10, deren über eine optische Wirkfläche 11 und eine Kugellinse 12 abgegebene Strahlung in ein weiteres, in eine Aufnahme 13 einsteckbares Kopplungselement (zweiter Steckerstift S2 mit zentralem Lichtwellenleiter LWL2) einkoppelbar ist. Die Empfangsdiode 5 und die Laserdiode 10 sind über elektrische Anschlüsse 14 mit einer Empfangs- bzw. Ansteuerschaltung verbunden. Die Aufnahmen 8, 13 sind entsprechend auf die Außendurchmesser der Steckerstifte S1, S2 abgestimmt, so daß eine optimale Kopplung der Enden der Lichtwellenleiter LWL1, LWL2 mit den optischen Wirkflächen 6 und 11 gewährleistet ist.

Durch eine Gehäuseöffnung 15 des Gehäuses 1 ist das Verbindungselement (Duplex-Stecker) DS in Pfeilrichtung 16 zur Kopplung seiner Steckerstifte S1, S2 mit den Aufnahmen 8 und 13 einführbar. In die optischen Achsen 18 und 19 zwischen den optischen Wirkflächen 6, 11 und der Gehäuseöffnung 15 ragen die freien Schenkel eines Y-förmigen Blatt-Federelements 20 aus Kunststoff oder Metall. Das Federelement 20 ist im Fußbereich 21 an einer Gehäuseseite 22 durch Ultraschall-Schweißen fixiert. Die freien Schenkel 23 und 24 der Y-Form verdecken aus Sicht der Gehäuseöffnung 15 im Ruhezustand die Wirkflächen 6, 11 der elektro-optischen Bauelemente 2, 3. Die Wirkflächen könnten auch durch strahlungsundurchlässige Körper verdeckt sein, die an den freien Schenkeln 23, 24 befestigt sind. Hinsichtlich der Einzelteilanzahl und des Fertigungsaufwandes ist es besonders vorteilhaft, wenn das Federelement 20 selbst (z. B. durch seine Schenkel 23, 24) die Abdeckfunktion für die Wirkflächen übernimmt.

Beim Einführen des Verbindungselements DS werden die freien Schenkel 23, 24 zur Gehäuseseite 22 hin entgegen der Feder-Rückstellkraft ausgelenkt. Dadurch werden die Wirkflächen 6, 11 aus Sicht der Gehäuseöffnung 15 freigegeben. In diesem Zustand geht jedoch keine Gefährdung für die Wirkflächen 6 und 11 bzw. von der Wirkfläche 11 (Laserdiode) aus, weil die Gehäuseöffnung 15 durch das bereits überwiegend eingeführte Verbindungselement DS nach außen hin weitestgehend abgeschirmt ist.

Zur Erhöhung der Feder-Rückstellkraft kann ein weiteres federndes Element 40 in Form einer weiteren Blattfeder an der Gehäuseseite 41 befestigt sein (Fig. 2). Das weitere Element 40 kann zur Erhöhung der Betriebssicherheit mit seinem freien Ende in Ruhelage zusätzlich die optische Wirkfläche verdekken. Die Blattfeder 32 (20) ist an der Gehäuseseite 41 angenietet.

Figur 3 zeigt zur weiteren Verdeutlichung der verdeckten optischen Wirkfläche eines Bauelements 30 im Ruhezustand der Blattfeder 32 eine stirnseitige Ansicht des Moduls gemäß Figur 2. Aus den Figuren 2 und 3 ist erkennbar, daß erst bei weitestgehend eingeführtem Verbindungselement ein Auslenken der Blattfedern 32, 40 erfolgt, wobei eine Schädigung der Umwelt bei beispielsweise defekter Ansteuerschaltung für die Laserdiode durch die Abschirmung des eingeführten Verbindungselementes verhindert ist. Dadurch ist in jedem Fall die abgegebene Strahlung für den Anwender unzugänglich. Die Federelemente 20 (Figur 1) bzw. 32, 40 (Figur 2) können in Einbaulage des elektro-optischen Moduls an der oberen Gehäuseseite angeordnet sein, so daß bei einem Federanbruch oder Federermüdung das Federelement unter Abdeckung der optischen Wirkfläche von oben herabhängt.

## Patentansprüche

1. Elektro-optisches Modul
- mit einem Gehäuse (1),
- mit zwei in dem Gehäuse (1) angeordneten elektro-optischen Bauelementen (2,3) mit Wirkflächen (6,11) zum Eintritt oder Austritt von optischer Strahlung und mit Aufnahmen (8,13), in die je ein Lichtwellenleiter-Steckerstift (S1,S2) eines durch eine Gehäuseöffnung (15) einführbaren Verbindungselements (DS) zur optischen Kopplung mit den Wirkflächen (6,11) einsteckbar ist, und
- mit einem Federelement (20), das Y-förmig ausgebildet ist und das in dem Gehäuse (1) vor den Aufnahmen (8,13) derart angeordnet ist, daß die freien, lichtundurchlässig ausgebildeten Schenkel (23,24) der Y-Form oder an den freien Schenkeln (23, 24) angeordnete strahlungsundurchlässige Körper beim Einführen des Verbindungselements (DS) aus einer die Wirkflächen (6,11) der elektro-optischen Bauelemente (2,3) aus Sicht der Gehäuseöffnung (15) verdeckenden Ruhelage entgegen der Feder-Rückstellkraft in eine die Wirkflächen (8,11) freigebende Lage auslenkbar sind.

2. Elektro-optisches Modul nach Anspruch 1, wobei das Federelement (20) aus Kunststoff oder Metall besteht und vorzugsweise in dem Gehäuse (1) angeschweißt ist.

3. Elektro-optisches Modul nach Anspruch 1 oder 2, wobei auf das Federelement (32) ein weiteres federndes Element (40) zur Erhöhung der Feder-Rückstellkraft einwirkt.

## Claims

1. Electro-optical module
- having a housing (1),
- having two electro-optical components (2, 3) arranged in the housing (1), which electro-optical components have active surfaces (6, 11) for the entrance or exit of optical radiation, and receivers (8, 13) into which can be plugged a respective optical waveguide plug pin (S1, S2) of a connecting element (DS) which can be inserted through a housing opening (15), for optical coupling with the active surfaces (6, 11), and
- having a spring element (20), which is constructed in the shape of a Y and is arranged in the housing (1) in front of the receivers (8, 13) in such a way that when the connecting element (DS) is inserted, the free limbs (23, 24) of the Y-shape, which are constructed so as to be impervious to light, or radiation-impermeable bodies arranged at the free limbs (23, 24), can be moved out of a position of rest, in which the active surfaces (6, 11) of the electro-optical components (2, 3) are covered with respect to the housing opening (15), against the restoring force of the spring, into a position in which the active surfaces (8 (sic), 11) are released.

2. Electro-optical module according to claim 1, with the spring element (20) consisting of plastics or metal and preferably being welded in the housing (1).

3. Electro-optical module according to claim 1 or 2, with a further spring-mounted element (40) acting on the spring element (32) in order to increase the restoring force of the spring.

## Revendications

1. Module électro-optique comportant
- un boîtier (1),
- deux éléments (2,3) électro-optiques disposés dans le boîtier (1) et ayant des surfaces (6,11) actives pour l'entrée ou la sortie d'un rayonnement optique et des logements (8,13), dans chacun desquels peut être enfiché une broche (S1,S2) de prise de guide d'ondes lumineuses d'un élément (DS) de liaison pouvant être introduit dans une ouverture (15) du boîtier, pour le couplage optique aux surfaces actives (6,11) et
- un élément (20) de ressort, qui est en forme de Y et qui est disposé dans le boîtier (1) devant les logements (8, 13), de telle sorte que les branches (23,24) libres opaques à la lumière du Y ou des corps opaques au rayonnement disposés sur les branches libres (23,24) puissent être déviées, lors de l'introduction de l'élément (DS) de liaison, d'une position de repos cachant les surfaces actives (6,11) des éléments électro-optiques (2,3) de la vue de l'ouverture (15) du boîtier, à l'encontre de la force de rappel du ressort, dans une position dégageant les surfaces actives (8,11).

2. Module électro-optique suivant la revendication 1, dans lequel l'élément (20) électro-optique est en matière plastique ou en métal et est de préférence brasé dans le boîtier (1).

3. Module électro-optique suivant la revendication 1 ou 2, dans lequel un élémént (40) élastique supplémentaire destiné à augmenter la force de rappel du ressort agit sur l'élément (32) de ressort.
